(19) **Europäisches Patentamt European Patent Office Office européen des brevets**

(11) **EP 3 911 999 B1**

(12) **FASCICULE DE BREVET EUROPEEN**

(45) Date de publication et mention de la délivrance du brevet:
**06.12.2023 Bulletin 2023/49**

(21) Numéro de dépôt: **20705424.8**

(22) Date de dépôt: **15.01.2020**

(51) Classification Internationale des Brevets (IPC):
**G02F 1/35** *(2006.01)*        **G02F 1/39** *(2006.01)*

(52) Classification Coopérative des Brevets (CPC):
**G02F 1/395; G02F 1/3536; G02F 1/3544; G02F 1/365**

(86) Numéro de dépôt international:
**PCT/FR2020/050055**

(87) Numéro de publication internationale:
**WO 2020/148506 (23.07.2020 Gazette 2020/30)**

(54) **TRANSPOSITION EN FREQUENCE D'UN SIGNAL OPTIQUE PAR MELANGE DE PLUSIEURS ONDES**

VERFAHREN ZUM UMSETZEN DER FREQUENZ EINES OPTISCHEN SIGNALS DURCH MISCHEN MEHRERER WELLEN

METHOD FOR TRANSPOSING THE FREQUENCY OF AN OPTICAL SIGNAL BY MIXING A PLURALITY OF WAVES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.01.2019 FR 1900450**

(43) Date de publication de la demande:
**24.11.2021 Bulletin 2021/47**

(73) Titulaires:
- **CENTRE NATIONAL DE LA RECHERCHE SCIENTIFIQUE (CNRS)**
  **75016 Paris (FR)**
- **Université de Bourgogne**
  **21000 Dijon (FR)**

(72) Inventeurs:
- **COLMAN, Pierre**
  **21000 Dijon (FR)**
- **PARRIAUX, Alexandre**
  **21000 Dijon (FR)**
- **HAMMANI, Kamal**
  **71880 Chatenoy-le-Royal (FR)**
- **MILLOT, Guy**
  **21220 Chevannes (FR)**

(74) Mandataire: **Plasseraud IP**
  **66, rue de la Chaussée d'Antin**
  **75440 Paris Cedex 09 (FR)**

(56) Documents cités:
**WO-A1-2011/113499    WO-A1-2017/149319
US-A1- 2014 217 269**

- **IVAN BIAGGIO ET AL: "Coupling-length phase matching for nonlinear optical frequency conversion in parallel waveguides", PHYSICAL REVIEW A (ATOMIC, MOLECULAR, AND OPTICAL PHYSICS), vol. 90, no. 4, 1 octobre 2014 (2014-10-01), XP055638700, USA ISSN: 1050-2947, DOI: 10.1103/PhysRevA.90.043816 cité dans la demande**

**Description**

**Domaine technique**

L'invention concerne un procédé de transposition en fréquence («frequency conversion» en anglais) d'un signal optique par mélange de plusieurs ondes, par exemple par un mélange à quatre ondes («four-wave mixing»), ainsi qu'un dispositif pour mettre en oeuvre un tel procédé.

**Technique antérieure**

Des applications de spectroscopie moléculaire nécessitent de disposer d'un rayonnement optique qui possède une longueur d'onde comprise entre 2 $\mu$m (micromètre) et 6 $\mu$m. Or des sources de rayonnement qui sont fonctionnelles dans cet intervalle spectral et qui possèdent les caractéristiques requises pour ces applications sont très onéreuses ou ne sont pas disponibles. Il a donc été proposé de produire le rayonnement qui est nécessaire à une telle application spectroscopique à partir d'une source laser qui est fonctionnelle à environ 1,55 $\mu$m, étant donné que de telles sources laser sont disponibles à faible prix grâce à leur utilisation de masse pour des applications de télécommunication. Le signal optique qui est produit par la source laser, et dont la longueur d'onde est d'environ 1,55 $\mu$m, est alors transposé en fréquence pour obtenir un signal optique qui est utile pour l'application souhaitée, par exemple un signal optique utile qui est dans la bande spectrale 2 $\mu$m - 6 $\mu$m. Dans toute la présente description, les longueurs d'onde citées sont relatives à une propagation libre du rayonnement électromagnétique dans le vide ou l'air. Lorsqu'un rayonnement considéré se propage dans un ou plusieurs guide(s) d'onde, la valeur de longueur d'onde citée pour ce rayonnement est celle d'un rayonnement de même fréquence que celui dans le(s) guide(s) d'onde, mais qui se propagerait librement dans le vide ou l'air.

De façon connue, la transposition en fréquence d'un signal optique de source pour produire un signal optique utile, peut être effectuée en utilisant un mécanisme non-linéaire dit de mélange à quatre ondes, qui peut résulter d'un effet Kerr optique. Pour cela un ou deux rayonnement(s) optique(s) de pompe est (sont) utilisé(s) pour transformer deux photons de ce (ces) rayonnement(s) de pompe en un photon du signal utile et un photon supplémentaire du signal de source. Le cas où les deux photons de pompe appartiennent à un même rayonnement monochromatique est dit dégénéré, par opposition à un cas non-dégénéré où les deux photons de pompe ont des valeurs de longueur d'onde qui sont différentes. Un tel mécanisme de transposition en fréquence est le plus souvent mis en oeuvre à l'intérieur d'un guide d'onde, par exemple à l'intérieur d'une fibre optique ou d'un guide d'onde intégré, en injectant simultanément le ou les deux rayonnement(s) de pompe et le signal de source dans ce guide d'onde, et en en extrayant le signal utile.

Mais pour se produire, le mécanisme non-linéaire de mélange à quatre ondes nécessite qu'une relation dite d'accord de phase soit satisfaite. Cette relation d'accord de phase s'applique aux constantes de propagation k qui sont effectives dans le guide d'onde où se produit le mélange à quatre ondes. Elle est de la forme : $k(\lambda_{pompe1})$ + $k(\lambda_{pompe2})$-$k(\lambda_{source})$ - $k(\lambda_{utile})$ + $\varepsilon$ = 0, où $k(\lambda_{pompe1})$ et $k(\lambda_{pompe2})$ sont les constantes de propagation des deux rayonnements de pompe dans le guide d'onde utilisé, $k(\lambda_{source})$ est la constante de propagation du signal de source dans ce même guide d'onde, et $k(\lambda_{utile})$ est la constante de propagation du signal utile aussi dans ce même guide d'onde, $\varepsilon$ est un terme non-linéaire, en général très faible et dont l'expression est connue, et qui dépend notamment de la puissance des rayonnements de pompe. Les constantes de propagation $k(\lambda_{pompe1})$, $k(\lambda_{pompe2})$, $k(\lambda_{source})$ et $k(\lambda_{utile})$ expriment la nature guidée de la propagation des rayonnements de pompe, du signal de source et du signal utile dans le guide d'onde qui est utilisé pour produire la transposition en fréquence. De façon connue, chacun des rayonnements de pompe, du signal de source et du signal utile se propage dans le guide d'onde selon un mode propre de celui-ci, et la dépendance de la constante de propagation k en fonction de la longueur d'onde est la relation de dispersion de ce mode propre. La valeur de chacune des constantes de propagation $k(\lambda_{pompe1})$, $k(\lambda_{pompe2})$, $k(\lambda_{source})$ et $k(\lambda_{utile})$ dépend en outre, conformément au mode propre du guide d'onde, de paramètres de ce guide d'onde, notamment de paramètres géométriques de celui-ci et de paramètres optiques des matériaux qui le constituent. Les valeurs de ces paramètres du guide d'onde doivent alors être sélectionnées pour que la relation d'accord de phase soit satisfaite pour des valeurs de $\lambda_{pompe1}$, $\lambda_{pompe2}$ et $\lambda_{source}$ qui sont à l'intérieur d'intervalles spectraux des sources optiques utilisées pour produire les rayonnements de pompe et le signal de source, respectivement, et pour une valeur de $\lambda_{utile}$ qui convient à l'application voulue pour le signal utile. Dans le cas particulier d'un rayonnement de pompe dégénéré, la relation d'accord de phase devient : $2\cdot k(\lambda_{pompe})$ - $k(\lambda_{source})$ - $k(\lambda_{utile})$ + $\varepsilon$ = 0, où $\lambda_{pompe}$ est la longueur d'onde du rayonnement de pompe dégénéré.

Toutefois, le nombre des paramètres du guide d'onde qui sont disponibles est insuffisant pour permettre que la relation d'accord de phase puisse être satisfaite simultanément pour des valeurs de $\lambda_{pompe1}$, $\lambda_{pompe2}$, $\lambda_{source}$ et $\lambda_{utile}$ à l'intérieur d'intervalles souhaités. Il a alors été proposé, notamment dans l'article intitulé «Coupling-length phase matching for nonlinear optical frequency conversion in parallel waveguides», de Ivan Biaggio, Virginie Coda et Germano Montemezzani, Physical Review A 90, 043816, 2014, de coupler le guide d'onde qui est utilisé pour produire la transposition en fréquence par mélange à quatre ondes, à un guide d'onde supplémentaire. Ce couplage modifie certaines au moins des constantes de propagation $k(\lambda_{pompe})$, $k(\lambda_{source})$ et $k(\lambda_{utile})$. De cette façon, des paramètres supplémentaires sont disponibles pour ajuster les constantes de propagation $k(\lambda_{pompe})$, $k(\lambda_{source})$ et $k(\lambda_{utile})$ qui sont relatives au guide d'onde où se produit la transposition en fréquence. Ces paramètres supplémentaires sont relatifs au guide d'onde supplémentaire et au couplage qui existe entre les deux guides d'onde. Il est ainsi possible d'ajuster les valeurs des paramètres des deux guides d'onde couplés pour que la relation d'accord de phase soit satisfaite en moyenne pour des valeurs de $\lambda_{pompe}$, $\lambda_{source}$ et $\lambda_{utile}$ qui présentent un intérêt.

Mais dans un tel système à guides d'onde couplés, le signal de source, le ou les rayonnement(s) de pompe et le signal utile sont chacun transférés progressivement d'un guide d'onde à l'autre lors de leur propagation, de façon répétitive et alternée entre les deux guides d'onde. Ainsi, chaque signal ou rayonnement est contenu alternativement dans l'un des guides d'onde puis dans l'autre. Il en résulte que la relation d'accord de phase n'est satisfaite que transitoirement lors de ces transferts des signaux/rayonnement(s) entre les deux guides d'onde. Le signal utile apparait alors transitoirement puis disparait, répétitivement, au cours de la propagation des rayonnements dans les guides d'onde. En adaptant les paramètres du système, il devient possible d'éviter chaque re-décroissance de l'intensité du signal utile, de sorte que cette intensité augmente d'une façon qui est linéaire en moyenne par rapport à une coordonnée longitudinale des guides d'onde. Mais même en augmentant la longueur des guides d'onde, il reste impossible d'obtenir de cette façon une intensité du signal utile qui soit suffisante pour certaines applications. En outre, lorsque les guides d'onde sont réalisés par une technologie de circuits optiques intégrés telle que disponible actuellement, et lorsque ces guides d'onde sont rectilignes, leur longueur est limitée par la taille maximale des circuits optiques intégrés qui est imposée par l'outil de la technologie utilisée. Dans l'état actuel, cette taille maximale est de quelques centimètres. Or recourber les guides d'onde à l'intérieur d'un circuit optique intégré a pour conséquence que la relation d'accord de phase n'est plus satisfaite aux endroits de courbure des guides d'onde.

Par ailleurs, des dispositifs diviseurs à plusieurs guides d'onde couplés sont couramment utilisés, pour répartir entre plusieurs sorties une intensité lumineuse qui est injectée à une entrée d'un tel dispositif diviseur. Il s'agit d'une utilisation différente, qui ne fait pas intervenir de mélange à quatre ondes produit par un effet non-linéaire. Le plus souvent, un tel dispositif diviseur d'intensité lumineuse possède une longueur de guides d'onde qui est inférieure à 100 $\mu$m, et une distance de séparation entre les guides d'onde qui sont couplés, qui est inférieure à 0,25 $\mu$m.

## Problème technique

A partir de cette situation, un but de la présente invention est de produire un signal utile par mélange à quatre ondes, avec une intensité qui est plus élevée que dans l'art antérieur. En particulier, l'invention a pour but de produire un signal utile avec une intensité qui soit suffisante pour une application spectroscopique.

## Résumé de l'invention

Pour atteindre ce but ou un autre, un premier aspect de l'invention propose un nouveau procédé de transposition en fréquence d'un signal optique de source pour produire un signal optique utile, par un mélange de plusieurs ondes qui résulte d'une interaction non-linéaire entre ces ondes. Le procédé comprend de produire à l'intérieur d'au moins un guide d'onde, au moins un photon du signal utile à partir d'au moins un photon d'au moins un rayonnement optique de pompe. Cette combinaison de photons se produit conformément à une relation d'accord de phase qui relie des constantes de propagation respectives du signal de source, de chaque rayonnement de pompe et du signal utile, ces constantes de propagation étant effectives dans ledit au moins un guide d'onde. L'invention s'applique aussi bien lorsque plusieurs photons dudit au moins un rayonnement de pompe qui interviennent dans le mélange d'ondes sont dégénérés ou non-dégénérés.

Chaque guide d'onde possède au moins un mode propre individuel qui est effectif pour chacun du signal de source, de l'au moins un rayonnement de pompe et du signal utile se propageant dans ce guide d'onde isolément par rapport à chaque autre guide d'onde. De plus, chaque guide d'onde possède au moins un paramètre individuel qui modifie une relation de dispersion effective pour le signal de source, chaque rayonnement de pompe et le signal utile qui se propagent dans ce guide d'onde selon son mode propre individuel. Un tel paramètre individuel peut être par exemple un paramètre géométrique du guide d'onde.

Pour l'invention, ledit au moins un guide d'onde comprend au moins deux guides d'onde qui sont agencés de sorte que le mode propre individuel de chacun des guides d'onde soit couplé avec un mode propre individuel d'au moins un autre des guides d'onde, pour chacun du signal de source, de chaque rayonnement de pompe et du signal utile.

Le procédé comprend d'injecter simultanément le signal de source et chaque rayonnement de pompe dans au moins un des guides d'onde, et d'extraire le signal utile d'au moins un de ces guides d'onde. Alors, parce que certains au moins des modes propres individuels des guides d'onde sont couplés, chacun du signal de source, de chaque rayonnement de pompe et du signal utile qui se propage à un endroit des guides d'onde selon le mode propre individuel d'un des guides d'onde, possède une répartition d'intensité entre plusieurs des guides d'onde qui varie au long de ces guides d'onde.

Aussi pour l'invention, au moins un paramètre de couplage, par exemple au moins une distance de séparation entre les guides d'onde, modifie une intensité du couplage qui existe entre les modes propres individuels de deux au moins des guides d'onde.

Alors, selon l'invention, des valeurs respectives des paramètres individuels des guides d'onde et dudit au moins un paramètre de couplage sont sélectionnées de sorte que la relation d'accord de phase soit satisfaite pour au moins un ensemble de constantes de propagation respectives du signal de source, de chaque rayonnement de pompe et du signal utile, chacune de ces constantes de propagation étant relative à un mode propre collectif de l'ensemble des guides d'onde. Ce mode propre collectif, appelé aussi super-mode, est effectif pour la propagation du signal de source, de chaque rayonnement de pompe ou du signal utile, et est tel que le signal de source, chaque rayonnement de pompe ou le signal utile qui se propage dans l'ensemble des guides d'onde selon ce mode propre collectif possède une répartition d'intensité entre les guides d'onde qui est constante au long des guides d'onde.

L'invention propose donc de sélectionner les valeurs des paramètres des guides d'onde et de chaque paramètre de couplage de sorte que la relation d'accord de phase soit satisfaite pour les constantes de propagation relatives au(x) mode(s) propre(s) collectif(s) de l'ensemble des guides d'ondes, tels que ce(s) mode(s) propre(s) collectif(s) est (sont) utilisé(s) par le signal de source, chaque rayonnement de pompe et le signal utile, par opposition aux constantes de propagation relatives aux modes propres individuels des guides d'ondes. Autrement dit, à titre d'exemple pour un cas de mélange à quatre ondes, l'invention remplace l'exigence d'une relation d'accord de phase du type $k_{individuel}(\lambda_{pompe1})$ + $k_{individuel}(\lambda_{pompe2})$ - $k_{individuel}(\lambda_{source})$ - $k_{individuel}(\lambda_{utile})$ + $\varepsilon_{individuel}$ = 0 dans le cas non-dégénéré, ou $2 \cdot k_{individuel}(\lambda_{pompe})$ - $k_{individuel}(\lambda_{source})$ - $k_{individuel}(\lambda_{utile})$ + $\varepsilon_{individuel}$ = 0 dans le cas dégénéré, relative à un ou des mode(s) propre(s) individuel(s) des guides d'onde, par la relation d'accord de phase appliquée à un ou des mode(s) propre(s) collectif(s) des guides d'ondes : $k_{collectif}(\lambda_{pompe1})$ + $k_{collectif}(\lambda_{pompe2})$ - $k_{collectif}(\lambda_{source})$ - $k_{collectif}(\lambda_{utile})$ + $\varepsilon_{collectif}$ = 0 dans le cas non-dégénéré, ou $2 \cdot k_{collectif}(\lambda_{pompe})$ - $k_{collectif}(\lambda_{source})$ - $k_{collectif}(\lambda_{utile})$ + $\varepsilon_{collectif}$ = 0 dans le cas dégénéré.

Il en résulte de l'invention, dans le cas général d'un mélange de plusieurs ondes, que la relation d'accord de phase est satisfaite continuellement au cours de la propagation du signal de source, de chaque rayonnement de pompe et du signal utile dans les guides d'onde. Pour cette raison, l'intensité du signal utile augmente rapidement en fonction de la coordonnée longitudinale des guides d'onde. Elle peut ainsi atteindre des niveaux plus élevés, notamment des niveaux d'intensité qui sont suffisants pour une utilisation du signal utile en spectroscopie. Dans le cas d'un mélange à quatre ondes, notamment tel que produit par un effet Kerr, l'intensité du signal utile augmente sensiblement quadratiquement en fonction de la coordonnée longitudinale des guides d'onde.

Préférablement, le mélange de plusieurs ondes qui est mis en oeuvre dans l'invention peut être un mélange à trois, quatre, cinq ou six ondes. Par exemple, un mélange à trois ondes peut résulter d'une interaction non-linéaire du type effet de susceptibilité diélectrique du second ordre, aussi appelé effet de khi-deux ($\chi^2$) et tel que produit notamment par un matériau de niobiate de lithium dans lequel se propagent les ondes. Un mélange à six ondes peut résulter d'une interaction non-linéaire du type effet plasma.

Des mises en oeuvre particulièrement avantageuses de l'invention peuvent correspondre à des mélanges à quatre ondes pour produire le signal utile. Par exemple, un tel mélange à quatre ondes peut résulter d'un effet Kerr. Dans ce cas, un photon du signal utile est produit avec un photon supplémentaire du signal de source à partir de deux photons de l'au moins un rayonnement de pompe.

De façon préférée, quel que soit le nombre des ondes dans le mélange et pour les rayonnements de pompe pouvant être dégénérés ou non-dégénérés le cas échéant, les guides d'onde qui sont utilisés pour l'invention peuvent être formés dans un circuit optique intégré. Ils produisent alors des efficacités de confinement des signaux optiques et des rayonnements optiques, qui sont supérieures à celles réalisables par une technologie de fibres optiques. Ces guides d'onde en technologie de circuits optiques intégrés peuvent alors être courbes sans provoquer de pertes d'intensité qui soient importantes pour les modes propres de propagation guidée. Dans ce cas, les guides d'onde qui sont utilisés pour l'invention peuvent être parallèles entre eux et disposés côte-à-côte dans au moins une partie du circuit optique intégré. Leur disposition en méandres ou en spirales permet leur fabrication dans des circuits optiques intégrés dont les dimensions sont compatibles avec les outils industriels disponibles.

Encore pour des guides d'onde qui sont parties d'un circuit optique intégré, au moins deux de ces guides d'onde peuvent être courbes et parallèles dans un virage qui est commun à ces au moins deux guides d'onde. Ces guides d'onde ont ainsi des courbures respectives qui sont différentes dans le virage. Dans ce cas, selon un perfectionnement de l'invention, certains au moins des paramètres individuels respectifs des deux guides d'onde peuvent avoir des valeurs dans le virage, telles que deux parties d'au moins un même signal ou rayonnement parmi le signal utile, chaque rayonnement de pompe et le signal de source, qui se propagent l'une dans l'un quelconque des guides d'onde courbes et l'autre dans un autre de ces guides d'onde courbes, selon les modes propres individuels de ceux-ci, restent en phase selon des directions radiales perpendiculaires chacune aux guides d'onde courbes dans le virage. Alors, des parties du signal utile, des parties du rayonnement de pompe, ou des parties du signal de source, qui se propagent dans les guides d'onde courbes, restent en phase entre elles au long du virage, exactement ou bien à l'ordre un par rapport à une coordonnée longitudinale des guides d'onde dans le virage. Il est ainsi possible de replier les guides d'onde sans réduire l'efficacité du mélange à plusieurs ondes pour produire le signal utile.

Encore pour des mises en oeuvre de l'invention en technologie de circuit optique intégré, les guides d'onde peuvent avoir des longueurs respectives qui sont comprises entre 1 mm (millimètre) et 100 mm, et deux quelconques des guides d'onde qui sont voisins peuvent avoir une distance de séparation entre eux qui est comprise entre 0,125 $\mu$m et 3 $\mu$m, lorsque cette distance est mesurée perpendiculairement aux deux guides d'onde voisins.

Conformément à des variantes usuelles de la technologie des circuits optiques intégrés, chaque guide d'onde peut être en un matériau qui est sélectionné parmi le silicium (Si), l'oxyde de titane ($TiO_2$) ou le nitrure de silicium ($Si_3N_4$), et être formé sur un substrat de quartz ($SiO_2$) ainsi qu'être noyé dans une couche de silice ($SiO_2$) servant de gaine pour chaque guide d'onde. Dans d'autres technologies de circuits optiques intégrés, le substrat et/ou la gaine de chacun des guides d'onde peut (peuvent) alternativement être constitué(s) de tout matériau diélectrique qui possède une valeur d'indice de réfraction inférieure à 2,00 pour les longueurs d'onde du signal utile, de chaque rayonnement de pompe et du signal de source, y compris des matériaux polymères ou l'air.

De façon générale, les caractéristiques additionnelles suivantes peuvent être reproduites pour des perfectionnements ou des modes de mise en oeuvre préférés de l'invention, isolément ou en combinaison de plusieurs d'entre elles :

- le procédé de l'invention peut utiliser de deux à cinq guides d'onde qui sont agencés de sorte qu'un mode propre individuel de chacun de ces guides d'onde soit couplé avec un mode propre individuel d'au moins un autre des guides d'onde, pour chacun du signal de source, de chaque rayonnement de pompe et du signal utile. Mais une configuration particulièrement préférée comporte deux guides d'onde avec un mode propre individuel de l'un de ces deux guides d'onde qui est couplé avec un mode propre individuel de l'autre des deux guides d'onde, pour chacun du signal de source, de chaque rayonnement de pompe et du signal utile ;
- lorsque plusieurs rayonnements de pompe interviennent dans la relation d'accord de phase, ceux-ci peuvent avoir des valeurs de longueur d'onde qui sont identiques. Autrement dit, ils peuvent être dégénérés. Ainsi, $\lambda_{pompe1} = \lambda_{pompe2}$ est possible, voire préféré, pour le cas du mélange à quatre ondes tel que pouvant résulter d'un effet Kerr ;
- chaque guide d'onde peut n'avoir qu'un seul mode propre individuel, notamment pour le rayonnement de pompe, pour lequel le champ électrique du signal ou du rayonnement est principalement perpendiculaire à un plan de juxtaposition des guides d'onde. Un tel mode propre individuel est couramment dit à polarisation transverse électrique, et le guide d'onde est dit monomode ;
- les modes propres individuels respectifs de certains des guides d'onde peuvent être couplés entre eux par recouvrement d'ondes évanescentes qui sont générées par des rayonnements qui se propagent dans ces guides d'onde selon leurs modes propres individuels ;
- ledit au moins un paramètre individuel de chaque guide d'onde peut comprendre au moins une dimension d'une section transversale de ce guide d'onde ;
- ledit au moins un paramètre de couplage entre les guides d'onde peut comprendre au moins une distance de séparation entre deux des guides d'onde ;
- lorsque plusieurs des guides d'onde sont courbes et parallèles dans un virage qui est commun à ces guides d'onde, une valeur moyenne des rayons de courbure respectifs des guides d'onde dans le virage peut être comprise entre 10 $\mu$m et 1 mm ;
- les valeurs des paramètres individuels des guides d'onde et dudit au moins un paramètre de couplage peuvent avantageusement être sélectionnées de sorte que, en outre, la relation d'accord de phase soit satisfaite à un ordre deux près par rapport à une longueur d'onde du signal de source, autour d'une valeur centrale de longueur d'onde de ce signal de source ;
- le signal de source peut posséder un spectre de forme quelconque, notamment un spectre en forme de peigne, à l'intérieur d'un intervalle spectral qui contient une partie au moins de ce signal de source. Dans ce cas notamment, la sélection des valeurs des paramètres individuels des guides d'onde et dudit au moins un paramètre de couplage pour que la relation d'accord de phase soit satisfaite à un ordre deux près par rapport à une longueur d'onde du signal de source, autour d'une valeur centrale de longueur d'onde de ce signal de source, est particulièrement avantageuse ;
- deux extrémités opposées d'un même des guides d'onde peuvent être raccordées l'une à l'autre pour former une boucle de recirculation de signaux et rayonnements optiques. L'intensité du signal utile qui est produit selon l'invention peut être encore plus élevée de cette façon ;
- le signal de source peut être constitué par au moins une composante spectrale qui possède une longueur d'onde comprise entre 1,3 $\mu$m et 1,8 $\mu$m, de préférence entre 1,5 $\mu$m et 1,6 $\mu$m ;
- chaque rayonnement de pompe peut être un rayonnement laser dont la longueur d'onde est comprise entre 1,2 $\mu$m et 2,6 $\mu$m, de préférence entre 1,7 $\mu$m et 2,1 $\mu$m ;
- le signal utile peut être constitué par au moins une autre composante spectrale qui possède une longueur d'onde comprise entre 2 $\mu$m et 6 $\mu$m, de préférence entre 2,2 $\mu$m et 4,5 $\mu$m ; et

- le signal utile peut être utilisé pour une application spectroscopique, en particulier pour une application de spectroscopie moléculaire.

Possiblement encore, le procédé de l'invention peut être utilisé pour produire plusieurs signaux optiques utiles différents, en particulier deux signaux optiques utiles différents, par un mélange de plusieurs ondes qui résulte d'une interaction non-linéaire entre ces ondes. Dans ce cas, le procédé comprend de produire simultanément à l'intérieur d'au moins un guide d'onde, au moins un photon de chacun des signaux utiles avec au moins un photon supplémentaire du signal de source à partir d'au moins un photon de l'au moins un rayonnement optique de pompe, conformément à une relation d'accord de phase qui relie des constantes de propagation respectives du signal de source, dudit au moins un rayonnement de pompe et de chacun des signaux utiles, effectives dans l'au moins un guide d'onde.

Un second aspect de l'invention propose un dispositif optique qui est adapté pour mettre en oeuvre un procédé conforme au premier aspect de l'invention.

Un tel dispositif comprend plusieurs guides d'onde ayant chacun au moins un mode propre individuel qui est effectif pour des rayonnements optiques se propageant dans ce guide d'onde isolément par rapport à chaque autre guide d'onde. De plus, chaque guide d'onde possède au moins un paramètre individuel qui modifie une relation de dispersion effective pour chaque rayonnement qui se propage dans ce guide d'onde selon son mode propre individuel.

Les guides d'onde du dispositif sont agencés de sorte que le mode propre individuel de chacun des guides d'onde soit couplé avec un mode propre individuel d'au moins un autre des guides d'onde. Ainsi, parce que certains au moins des modes propres individuels des guides d'onde sont couplés, chaque rayonnement qui se propage à un endroit des guides d'onde selon le mode propre individuel d'un de ces guides d'onde possède une répartition d'intensité entre plusieurs des guides d'onde qui varie au long des guides d'onde.

Pour l'invention, le dispositif est tel qu'au moins un paramètre de couplage modifie une intensité du couplage qui existe entre les modes propres individuels de deux au moins des guides d'onde.

Alors, selon l'invention, des valeurs respectives des paramètres individuels des guides d'onde et dudit au moins un paramètre de couplage sont telles qu'un procédé conforme au premier aspect de l'invention puisse être mis en oeuvre en utilisant le dispositif. Autrement dit, ces valeurs des paramètres individuels des guides d'onde et dudit au moins un paramètre de couplage sont telles que la relation d'accord de phase d'un mélange à quatre ondes soit satisfaite pour un signal de source, au moins un rayonnement de pompe et un signal utile qui se propagent chacun dans les guides d'onde selon au moins un mode propre collectif de l'ensemble des guides d'onde du dispositif.

**Brève description des figures**

Les caractéristiques et avantages de la présente invention apparaîtront plus clairement dans la description détaillée ci-après d'exemples de réalisation non-limitatifs, en référence aux figures annexées parmi lesquelles :

[Fig. 1a] est une vue en perspective d'un circuit optique intégré à un seul guide d'onde ;

[Fig. 1b] correspond à [Fig. 1a] pour un circuit optique intégré à plusieurs guides d'ondes, tel qu'utilisé dans la présente invention ;

[Fig. 2] est un diagramme qui montre schématiquement un effet de couplage entre deux guides d'onde sur une constante de propagation de mode propre ;

[Fig. 3] est un diagramme d'intensité de signal utile qui montre une efficacité de l'invention ;

[Fig. 4] est une vue en plan d'une partie d'un dispositif optique conforme à l'invention, qui possède une configuration locale optimisée ; et

[Fig. 5] est une vue en plan d'un mode de réalisation préféré de l'invention.

**Description détaillée de l'invention**

Pour raison de clarté, les dimensions des éléments qui sont représentés dans ces figures ne correspondent ni à des dimensions réelles, ni à des rapports de dimensions réels. En outre, des références identiques qui sont indiquées dans des figures différentes désignent des éléments identiques ou qui ont des fonctions identiques.

Par ailleurs, l'invention est décrite ci-dessous dans le cas d'un mélange à quatre ondes tel que résultant d'un effet Kerr, et dans le cas d'un rayonnement de pompe qui est dégénéré : $\lambda_{pompe1} = \lambda_{pompe2} = \lambda_{pompe}$, en reprenant les notations de la partie générale de la présente description. Mais l'Homme du métier saura transposer cette description à un cas de rayonnements de pompe qui ne sont pas dégénérés sans faire preuve d'activité inventive, et aussi au cas d'une interaction non-linéaire qui produit un mélange d'ondes différent.

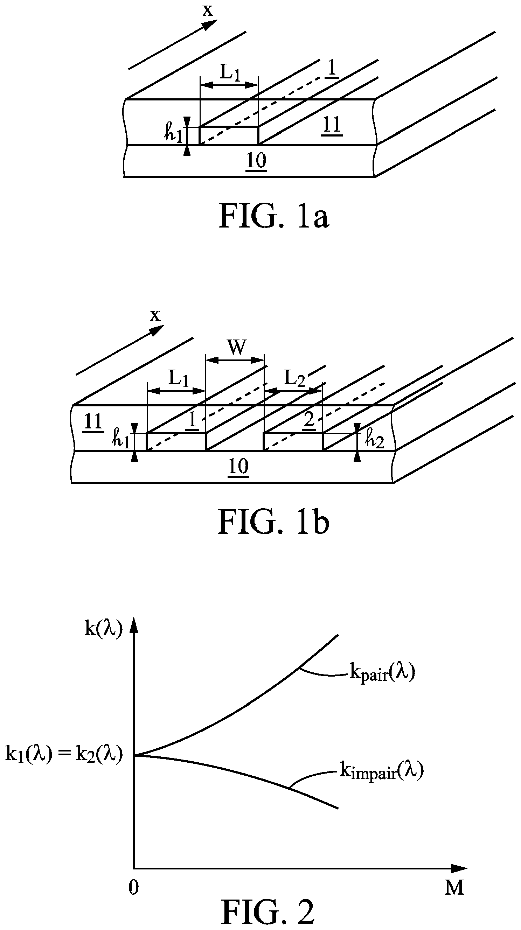

[Fig. 1a] montre un guide d'onde qui est réalisé dans un circuit optique intégré, et dont la structure peut être reprise pour mettre en oeuvre l'invention. La référence 10 désigne un substrat du circuit optique intégré, par exemple un substrat en quartz, la référence 1 désigne le guide d'onde, et la référence 11 désigne une couche d'enrobage du guide d'onde 1. Le guide d'onde 1 peut être formé d'un coeur de guide d'onde qui est constitué d'un matériau dont l'indice de réfraction optique est supérieur à ceux du substrat 10 et de la couche 11, pour des rayonnements optiques qui sont destinés à être confinés dans ce guide d'onde. Le matériau du guide d'onde 1 peut être du silicium (Si), de l'oxyde de titane (TiO$_2$) ou du nitrure de silicium (Si$_3$N$_4$), à titre d'exemples non limitatifs. Grâce à la différence de valeur d'indice de réfraction entre le guide d'onde 1 et les matériaux du substrat 10 et de la couche 11, une efficacité de confinement suffisante est obtenue pour les rayonnements qui sont guidés par le guide d'onde 1, pour que ce guide d'onde puisse présenter une courbure variable sans provoquer de pertes d'intensité qui soient gênantes pour chaque rayonnement guidé. De façon connue, un tel guide d'onde 1 possède un ou plusieurs mode(s) propre(s) qui est (sont) effectif(s) pour la propagation de chaque rayonnement optique le long de ce guide d'onde. Alors, chaque mode propre possède une relation de dispersion $k_1(\lambda)$ qui relie une constante de propagation $k_1$ du rayonnement tel que guidé par le guide d'onde 1 selon ce mode propre, à une valeur de longueur d'onde $\lambda$ de ce rayonnement lorsqu'il se propage dans le vide ou l'air. Pour rappel : $\lambda=2\pi C/f$, où C est la célérité de la lumière dans le vide et f est la fréquence du rayonnement, qui est identique lorsque ce rayonnement se propage dans le vide et lorsqu'il se propage de façon guidée par le guide d'onde 1. De façon encore connue, chaque relation de dispersion $k_1(\lambda)$ d'un mode propre dépend en outre de paramètres du guide d'onde 1, par exemple, la hauteur $h_1$ et la largeur $L_1$ de ce guide d'onde. Couramment, la hauteur $h_1$ peut être égale à 0,22 $\mu$m ou 0,34 $\mu$m, et la largeur $L_1$ peut être de l'ordre de quelques micromètres pour les valeurs de longueur d'onde qui seront citées dans la suite. Sans que ce soit une nécessité ni une limitation, on pourra supposer que chaque guide d'onde est monomode. Enfin, de façon encore connue, un rayonnement qui se propage de façon guidée par le guide d'onde 1, c'est-à-dire selon sa direction longitudinale x, possède simultanément une structure d'onde progressive selon cette direction x et une structure d'onde évanescente dans des plans perpendiculaires à la direction x, à l'extérieur du guide d'onde 1. Un tel mode propre a été appelé mode propre individuel du guide d'onde 1.

[Fig. 1b] montre un circuit optique intégré tel que pouvant être utilisé pour la présente invention. Il possède une structure à substrat 10 et couche d'enrobage 11 qui est similaire à celle de [Fig. 1a], mais comprend plusieurs guides d'onde qui sont juxtaposés sur la surface du substrat 10. De façon non-limitative et pour raison de clarté de la description qui suit, on supposera que le circuit ne comprend que deux guides d'onde 1 et 2. A la lumière de la description fournie dans ce cas de deux guides d'onde, l'Homme du métier saura en généraliser les caractéristiques à un nombre quelconque de guides d'onde couplés. $h_1$ et $L_1$ désignent respectivement la hauteur et la largeur du guide d'onde 1, $h_2$ et $L_2$ désignent respectivement la hauteur et la largeur du guide d'onde 2, et W désigne la distance de séparation entre eux. Les deux guides d'onde 1 et 2 sont supposés sensiblement parallèles, et voisins dans des plans perpendiculaires à ces guides d'onde, x est la coordonnée longitudinale commune des deux guides d'onde. Chaque guide d'onde s'étend donc entre des valeurs 0 et L de la coordonnée x. Typiquement, L peut être comprise entre 5 mm et 100 mm.

Lorsque la distance de séparation W est inférieure à ou de l'ordre de l'extension transversale évanescente du mode propre individuel d'au moins un des guides d'onde 1 et 2, le recouvrement qui en résulte entre les modes propres individuels des deux guides d'onde produit un couplage entre ces modes propres. Ce couplage est d'autant plus intense que la distance de séparation W est faible. Typiquement, W peut être comprise entre 0,125 $\mu$m et 3 $\mu$m.

En fait, les modes propres individuels des deux guides d'onde 1 et 2 tels que présentés jusqu'à présent, et correspondant pour chacun d'eux à du rayonnement qui n'est confiné que sur l'un des deux guides d'onde, n'est plus un mode propre pour l'ensemble des deux guides d'onde couplés. Alors, du rayonnement qui est injecté dans l'un des deux guides d'onde va osciller d'un guide d'onde à l'autre au cours de sa propagation selon la direction longitudinale x. Il en résulte qu'un effet non-linéaire, tel que l'effet Kerr optique, ne peut se produire que dans une mesure qui varie sensiblement périodiquement avec la coordonnée x. Un rayonnement qui est généré par cet effet non-linéaire possède alors une intensité moyenne qui reste limitée. Il est possible de modifier localement les relations de dispersion des modes propres individuels des deux guides d'onde 1 et 2 en variant les valeurs de $h_1$, $L_1$, $h_2$, $L_2$ et W en fonction de x, pour que le rayonnement qui est produit par l'effet non-linéaire s'accumule progressivement. Son intensité peut alors croître en moyenne linéairement en fonction de x. Mais une telle augmentation linéaire de l'intensité du rayonnement qui est généré par l'effet non-linéaire reste insuffisante pour de nombreuses applications.

L'invention propose alors un nouvel ajustement des paramètres de chacun des guides d'onde 1 et 2, et du paramètre de couplage, qui produit une augmentation plus rapide de l'intensité du rayonnement qui est produit par l'effet non-linéaire.

Selon l'invention, les valeurs de $h_1$, $L_1$, $h_2$, $L_2$ et W sont sélectionnées pour satisfaire la relation d'accord de phase de l'effet non-linéaire avec les constantes de propagation des modes propres de l'ensemble des guides d'onde couplés. Ces modes propres de l'ensemble des guides d'onde couplés ont été appelés modes propres collectifs des guides d'onde couplés. Chaque constante de propagation qui est utilisée pour la relation d'accord de phase est donc celle de l'un de ces modes propres collectifs.

[Fig. 2] illustre la modification des relations de dispersion qui est produite par le couplage entre guides d'onde, dans le cas des deux guides d'onde 1 et 2 tels que représentés dans [Fig. 1b]. Par simplicité, on suppose en outre que ces deux guides d'onde sont identiques. Donc $h_1=h_2$ et $L_1=L_2$ en particulier. L'Homme du métier saura encore étendre les principes présentés à des ensembles de guides d'onde couplés qui comprennent plus de deux guides d'onde, et aux cas où les guides d'onde peuvent être différents. L'axe d'ordonnée du diagramme de [Fig. 2] repère des valeurs de constante de propagation $k(\lambda)$ effective pour un rayonnement de longueur d'onde $\lambda$. Dans la suite, cette longueur d'onde $\lambda$ sera alternativement celle du signal de source, du rayonnement de pompe ou celle du signal utile. L'axe d'abscisse du diagramme repère une intensité du couplage entre les guides d'onde 1 et 2, notée M. Cette intensité de couplage M est une fonction décroissante de la distance de séparation W entre les deux guides d'onde 1 et 2. En l'absence de couplage (M=0), les deux constantes de propagation $k_1(\lambda)$ et $k_2(\lambda)$ qui sont relatives séparément aux modes propres individuels respectifs des deux guides d'onde 1 et 2, supposés monomodes, sont égales : $k_1(\lambda) = k_2(\lambda)$. Lorsque l'intensité de couplage M croît, une levée de dégénérescence se produit, créant les deux états propres collectifs suivants, relatifs chacun à la paire des guides d'onde 1 et 2 : un état propre collectif pair pour lequel le champ électrique est réparti symétriquement dans les deux guides d'onde, et un état propre collectif impair pour lequel le champ électrique est réparti antisymétriquement dans les deux guides d'onde. La constante de propagation de l'état propre collectif pair est $k_{pair}(\lambda)$, et celle de l'état propre collectif impair est $k_{impair}(\lambda)$. Etant donné qu'il s'agit d'états propres collectifs de l'ensemble des deux guides d'onde, un rayonnement qui se propage selon la coordonnée x de façon guidée par la paire des guides d'onde 1 et 2, selon l'un quelconque de ces modes propres collectifs, présente une intensité qui est constante en fonction de x, en l'absence d'effet non-linéaire.

L'effet non-linéaire, par exemple l'effet Kerr optique, qui est utilisé pour produire un signal optique utile, produit simultanément un photon de ce signal utile et un photon d'un signal optique de source à partir de deux photons d'un rayonnement optique de pompe. Le signal de source et le rayonnement de pompe sont injectés dans les guides d'ondes 1 et 2, ou au moins dans l'un d'entre eux, et lors de leurs propagations selon la coordonnée longitudinale x, l'intensité du rayonnement de pompe diminue alors que celles du signal de source et du signal utile croissent. Le but est d'atteindre une intensité suffisante pour le signal utile en x = L, alors que l'intensité de ce signal utile est nulle en x = 0. Pour que l'effet non-linéaire se produise, une relation d'accord de phase doit être vérifiée, qui relie les constantes de propagation du signal de source, du rayonnement de pompe et du signal utile. Cette relation d'accord de phase est de la forme $2 \cdot k(\lambda_{pompe}) - k(\lambda_{utile}) - k(\lambda_{source}) + \varepsilon = 0$, où $\lambda_{pompe}$ est la longueur d'onde en propagation libre dans le vide du rayonnement de pompe, $\lambda_{utile}$ est la longueur d'onde en propagation libre dans le vide du signal utile, $\lambda_{source}$ est la longueur d'onde en propagation libre dans le vide du signal de source, et $\varepsilon$ est un terme non-linéaire de faible valeur dont l'expression est connue. Selon l'invention, les valeurs des constantes de propagation $k(\lambda_{pompe})$, $k(\lambda_{utile})$ et $k(\lambda_{source})$ à introduire dans cette relation d'accord de phase sont relatives chacune à un mode propre collectif des guides d'onde couplés. Toutefois, ce mode propre collectif peut ne pas être le même entre deux quelconques parmi le signal de source, le rayonnement de pompe et le signal utile. Ainsi, pour le cas des deux guides d'onde couplés de [Fig. 1b] et [Fig. 2], les combinaisons suivantes sont possibles selon l'invention :

$$2 \cdot k_{impair}(\lambda_{pompe}) - k_{impair}(\lambda_{utile}) - k_{impair}(\lambda_{source}) + \varepsilon = 0$$

$$2 \cdot k_{pair}(\lambda_{pompe}) - k_{impair}(\lambda_{utile}) - k_{impair}(\lambda_{source}) + \varepsilon = 0$$

$$2 \cdot k_{impair}(\lambda_{pompe}) - k_{pair}(\lambda_{utile}) - k_{pair}(\lambda_{source}) + \varepsilon = 0$$

$$2 \cdot k_{pair}(\lambda_{pompe}) - k_{pair}(\lambda_{utile}) - k_{pair}(\lambda_{source}) + \varepsilon = 0$$

$$k_{impair}(\lambda_{pompe}) + k_{pair}(\lambda_{pompe}) - k_{pair}(\lambda_{utile}) - k_{impair}(\lambda_{source}) + \varepsilon = 0$$

$$k_{impair}(\lambda_{pompe}) + k_{pair}(\lambda_{pompe}) - k_{impair}(\lambda_{utile}) - k_{pair}(\lambda_{source}) + \varepsilon = 0$$

Pour produire le signal utile selon l'invention, l'une au moins de ces relations doit être satisfaite pour au moins une valeur de $\lambda_{utile}$ dans l'intervalle spectral qui est désiré pour l'application envisagée du signal utile, et pour au moins une valeur de $\lambda_{source}$ et au moins une valeur de $\lambda_{pompe}$ qui devront être adoptées. L'existence d'un tel triplet de valeurs $\lambda_{utile}$, $\lambda_{source}$,

$\lambda_{pompe}$ est fournie par une sélection adéquate de valeurs pour $h_1$, $L_1$, $h_2$, $L_2$ et W qui paramètrent chacune des relations de dispersion $k_{impair}(\lambda)$ et $k_{pair}(\lambda)$, où $\lambda$ désigne encore l'une des longueurs d'onde $\lambda_{utile}$, $\lambda_{source}$ et $\lambda_{pompe}$ de façon générique. Ces valeurs de $h_1$, $L_1$, $h_2$, $L_2$ et W peuvent être recherchées par calculs numériques, à partir des fonctions $k_{impair}(\lambda, h_1, L_1, h_2, L_2, W)$ et $k_{pair}(\lambda, h_1, L_1, h_2, L_2, W)$. Selon une méthode possible de recherche de solution, la fonction $f(\lambda_{source}) = 2 \cdot k_{impair}(\lambda_{pompe}, h_1, L_1, h_2, L_2, W) - k_{impair}(\lambda_{utile}, h_1, L_1, h_2, L_2, W) - k_{impair}(\lambda_{source}, h_1, L_1, h_2, L_2, W) + \varepsilon$ peut être tracée en fonction de $\lambda_{source}$, les valeurs de $\lambda_{pompe}$, $\lambda_{utile}$, $h_1$, $L_1$, $h_2$, $L_2$ et W étant fixées, et on recherche s'il existe une valeur de $\lambda_{source}$ correspondant à une unité d'émission de rayonnement qui serait disponible pour le signal de source, et pour laquelle cette fonction $f(\lambda_{source})$ s'annule. Cette recherche est ensuite recommencée pour d'autres valeurs de $\lambda_{pompe}$, $\lambda_{utile}$, $h_1$, $L_1$, $h_2$, $L_2$ et W, puis de même pour chacune des combinaisons des modes propres collectifs impairs et pairs entre le signal de source, le rayonnement de pompe et le signal utile, telles que citées plus haut pour obtenir des solutions de plusieurs relations d'accord de phase toutes possibles. Des solutions peuvent être recherchées ainsi, pour lesquelles $\lambda_{source}$ est comprise entre 1,3 $\mu$m et 1,8 $\mu$m, de préférence entre 1,5 $\mu$m et 1,6 $\mu$m. De telles valeurs correspondent à des sources d'émission laser qui sont couramment utilisées pour des applications de télécommunication. $\lambda_{pompe}$ peut être comprise entre 1,2 $\mu$m et 2,6 $\mu$m, de préférence entre 1,7 $\mu$m et 2,1 $\mu$m, correspondant à des sources d'émission laser à fibres dopées au thulium. Enfin, $\lambda_{utile}$ peut être comprise entre 2 $\mu$m et 6 $\mu$m, de préférence entre 2,2 $\mu$m et 4,5 $\mu$m, pour être adaptée à une application de spectroscopie moléculaire, par exemple. Pour cela, une valeur commune égale à 0,22 $\mu$m ou 0,34 $\mu$m peut être affectée aux hauteurs $h_1$ et $h_2$ des guides d'onde 1 et 2, et la distance de séparation W peut être comprise entre 0,125 $\mu$m et 3 $\mu$m. $L_1$ et $L_2$ peuvent être identiques et comprises entre 0,370 $\mu$m et 2,10 $\mu$m.

En pratique, il peut être suffisant de remplacer l'équation $2 \cdot k_{impair}(\lambda_{pompe}, h_1, L_1, h_2, L_2, W) - k_{impair}(\lambda_{utile}, h_1, L_1, h_2, L_2, W) - k_{impair}(\lambda_{source}, h_1, L_1, h_2, L_2, W) + \varepsilon = 0$ par l'inégalité $2 \cdot k_{impair}(\lambda_{pompe}, h_1, L_1, h_2, L_2, W) - k_{impair}(\lambda_{utile}, h_1, L_1, h_2, L_2, W) - k_{impair}(\lambda_{source}, h_1, L_1, h_2, L_2, W) < \pi/L$, et de même pour chaque autre équation d'accord de phase, où L désigne encore la longueur commune des deux guides d'onde 1 et 2 selon l'axe de coordonnée longitudinale x. Chacune de ces inégalités d'accord de phase est notée génériquement dans la suite $\Delta k_{collectif} < \pi/L$, pour désigner toutes les combinaisons des modes propres collectifs impair et pair entre le signal de source, le rayonnement de pompe et le signal utile. Il n'est alors pas nécessaire de calculer le terme non-linéaire $\varepsilon$, et la connaissance des relations de dispersion des modes propres collectifs $k_{impair}(\lambda)$ et $k_{pair}(\lambda)$ est suffisante.

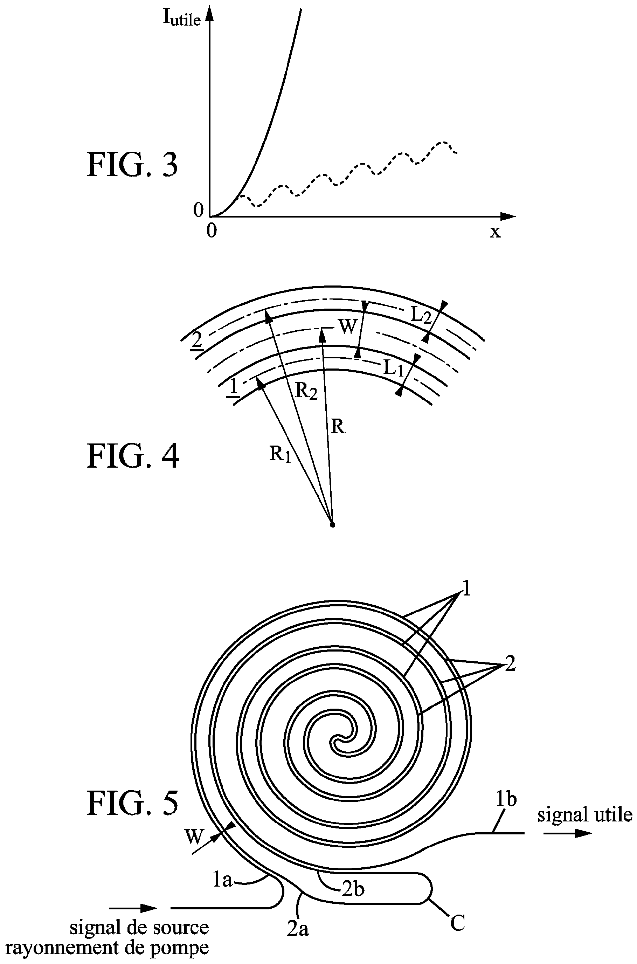

[Fig. 3] montre la variation en fonction de la coordonnée longitudinale x, de l'intensité $I_{utile}$ du signal utile pour l'un des modes propres collectifs (courbe en trait continu). Cette variation est sensiblement de type quadratique, permettant d'obtenir le signal utile avec une intensité élevée. Ainsi, l'intensité du signal utile croît rapidement en fonction de la coordonnée longitudinale x, jusqu'à une valeur de saturation non représentée. Par exemple, des valeurs de $I_{utile}$ qui sont supérieures à quelques dizaines de milliwatts peuvent être obtenues pour L = 100 mm. Le plus souvent, pour obtenir une valeur de $I_{utile}$ qui soit suffisante pour l'application envisagée, L est supérieur à 5 mm. A titre de comparaison, la courbe en traits interrompus dans [Fig. 3] correspond à l'intensité $I_{utile}$ qui peut être obtenue au mieux lorsque les valeurs de $h_1$, $L_1$, $h_2$, $L_2$ et W sont sélectionnées pour que la relation d'accord de phase soit satisfaite en utilisant les relations de dispersion des modes propres individuels des guides d'onde 1 et 2 : $k_1(\lambda, h_1, L_1, h_2, L_2, W)$ ou $k_2(\lambda, h_1, L_1, h_2, L_2, W)$.

Certaines applications nécessitent que le signal utile soit composé de plusieurs composantes spectrales, comme par exemple un peigne de longueurs d'onde à l'intérieur d'un intervalle spectral autour d'une valeur moyenne de longueur d'onde $\lambda_{utile\_moyenne}$. Alors, si le rayonnement de pompe est monochromatique, la génération d'un tel signal utile nécessite d'utiliser un peigne de longueurs d'onde pour le signal de source, autour d'une valeur moyenne de longueur d'onde $\lambda_{source\_moyenne}$. Il est alors nécessaire que la relation d'accord de phase $f(\lambda_{source}) = 0$ ou $\Delta k_{collectif} < \pi/L$ soit vérifiée au second ordre près pour toutes les valeurs de $\lambda_{source}$ dans un voisinage $\lambda_{source\_moyenne}$. Pour cela, des valeurs de $\lambda_{pompe}$, $h_1$, $L_1$, $h_2$, $L_2$ et W doivent être recherchées, qui sont telles que la dérivée partielle de la fonction f ou de $\Delta k_{collectif}$ par rapport à $\lambda_{source}$ soit nulle pour les valeurs de $\lambda_{source\_moyenne}$ et $\lambda_{utile\_moyenne}$ qui vérifient $f(\lambda_{source\_moyenne}, \lambda_{utile\_moyenne}) = 0$ ou $\Delta k_{collectif}(\lambda_{source\_moyenne}, \lambda_{utile\_moyenne} < \pi/L$. De façon équivalente, la dérivée partielle de la fonction f ou $\Delta k_{collectif}$ par rapport à $\lambda_{utile}$ est nulle pour les valeurs de $\lambda_{source\_moyenne}$ et $\lambda_{utile\_moyenne}$.

Pour faciliter la fabrication des guides d'onde parallèles dans un circuit optique intégré, notamment lorsque la longueur L vaut plusieurs centimètres, il peut être nécessaire de courber ces guides d'onde dans un plan parallèle au substrat, afin de réduire les dimensions latérales de ce substrat. Par exemple, les guides d'onde parallèles peuvent former des méandres ou être enroulés sur la surface du substrat du circuit optique intégré. [Fig. 4] représente un virage qui est suivi par les deux guides d'onde parallèles 1 et 2, avec un rayon de courbure moyen R du virage, mesuré à la moitié de la distance de séparation W entre les deux guides d'onde. Alors, pour que l'effet de l'invention quant à l'accroissement important de l'intensité du signal utile soit maintenu malgré la courbure des guides d'onde, il est nécessaire qu'une partie du signal de source (respectivement du signal utile et du rayonnement de pompe) qui se propage dans le guide d'onde 1 reste en phase le long de directions radiales dans le virage, avec une autre partie du signal de source (resp. du signal utile et du rayonnement de pompe) qui se propage dans le guide d'onde 2. Or les deux guides d'onde 1 et 2 ont des rayons de courbure différents, respectivement $R_1$ et $R_2$, qui altèrent dans des mesures différentes la longueur de chemin optique à l'intérieur de chacun des guides d'onde 1 et 2. Il est alors avantageux de compenser cette altération causée par la configuration en virage, par des modulations des paramètres individuels des deux guides d'onde 1 et 2, par exemple de leurs largeurs respectives $L_1$ et $L_2$. Une telle compensation s'écrit $k_1 \cdot R_1 = k_2 \cdot R_2$ en fonction des constantes de propagation des modes propres individuels des guides d'onde 1 et 2. Elle peut être exprimée au premier ordre de la façon suivante, en fonction du rayon de courbure moyen R : $k_1 \cdot (R-(W+L_1)/2) = k_2 \cdot (R+(W+L_2)/2)$. Dans la pratique, le rayon de courbure moyen R peut être compris entre 25 $\mu$m et 1 mm, menant à un écart de largeur $L_1 - L_2$ dans le virage, entre les deux guides d'onde 1 et 2, qui est de l'ordre de ou inférieur à 0,15 $\mu$m en valeur absolue lorsque $h_1 = h_2$, le guide d'onde le plus large étant généralement le plus à l'extérieur du virage.

[Fig. 5] illustre un perfectionnement de l'invention, qui permet une augmentation encore plus rapide de l'intensité du signal utile $I_{utile}$ en fonction de la coordonnée longitudinale x. Bien que représenté dans cette figure pour une configuration à deux guides d'onde qui sont enroulés en spirales, le perfectionnement peut être utilisé avec une forme quelconque des guides d'onde. Il s'applique lorsque l'un des guides d'onde, par exemple le guide d'onde 2, n'est utilisé ni pour injecter le signal de source et le rayonnement de pompe, ni pour extraire le signal utile. Alors, les extrémités 2a et 2b de ce guide d'onde 2 peuvent être connectées l'une à l'autre pour former une boucle C de recirculation de parties du signal de source, du rayonnement de pompe et du signal utile qui passent par les extrémités du guide d'onde 2. Etant donné que l'effet non-linéaire qui génère le signal utile est de type effet stimulé, un renforcement de cet effet est produit par la recirculation des parties du signal de source, du rayonnement de pompe et du signal utile. Pour le mode de réalisation de [Fig. 5], le signal de source et le rayonnement de pompe peuvent être injectés dans le guide d'onde 1 par une extrémité de celui-ci, par exemple l'extrémité 1a, et le signal utile peut être extrait du guide d'onde 1 par son autre extrémité 1b.

Il est entendu que l'invention peut être reproduite en modifiant des aspects secondaires des modes de réalisation qui ont été décrits en détail ci-dessus, tout en conservant certains au moins des avantages cités. Notamment :

- un dispositif optique conforme à l'invention peut comporter un nombre quelconque de guides d'onde couplés, et ceux-ci peuvent avoir des formes et des courbures quelconques ;
- les rayonnements de pompe peuvent être dégénérés ou non-dégénérés ;
- toutes les valeurs numériques qui ont été citées ne l'ont été qu'à titre d'illustration, et peuvent être changées en fonction de l'application considérée. En particulier, la longueur d'onde du signal utile peut être supérieure ou inférieure à celle du signal de source ; et
- l'un au moins des guides d'onde peut être muni d'une structure qui est périodique selon la direction longitudinale de ce guide d'onde. En particulier, une telle structure peut être mise en oeuvre pour conférer au guide d'onde une fonction de filtrage. D'autres structures de guides d'onde peuvent encore être combinées avec l'invention, sans limitation, y compris au moins un guide d'onde qui possède un motif de structuration selon au moins une direction perpendiculaire à la direction longitudinale de ce guide d'onde.

## Revendications

1. Procédé de transposition en fréquence d'un signal optique de source pour produire un signal optique utile, par un mélange de plusieurs ondes qui résulte d'une interaction non-linéaire entre lesdites ondes, comprenant de produire à l'intérieur d'au moins un guide d'onde (1, 2), au moins un photon du signal utile à partir d'au moins un photon d'au moins un rayonnement optique de pompe, conformément à une relation d'accord de phase qui relie des constantes de propagation respectives du signal de source, dudit au moins un rayonnement de pompe et du signal utile, effectives dans ledit au moins un guide d'onde,

   chaque guide d'onde (1, 2) ayant au moins un mode propre individuel qui est effectif pour chacun du signal de source, de chaque rayonnement de pompe et du signal utile se propageant dans ledit guide d'onde isolément par rapport à chaque autre guide d'onde,
   chaque guide d'onde (1, 2) ayant en outre au moins un paramètre individuel qui modifie une relation de dispersion effective pour le signal de source, chaque rayonnement de pompe et le signal utile qui se propagent dans ledit guide d'onde selon le mode propre individuel dudit guide d'onde,
   ledit au moins un guide d'onde comprenant au moins deux guides d'onde (1, 2) qui sont agencés de sorte que le mode propre individuel de chacun des guides d'onde soit couplé avec un mode propre individuel d'au moins un autre des guides d'onde, pour chacun du signal de source, de chaque rayonnement de pompe et du signal utile,
   le procédé comprenant d'injecter simultanément le signal de source et chaque rayonnement de pompe dans au moins un des guides d'onde (1, 2), et d'extraire le signal utile d'au moins un des guides d'onde,
   chacun du signal de source, de chaque rayonnement de pompe et du signal utile qui se propage à un endroit des guides d'onde (1, 2) selon le mode propre individuel d'un desdits guides d'onde ayant une répartition d'intensité entre plusieurs des guides d'onde qui varie au long des guides d'onde, parce que certains au moins des modes propres individuels desdits guides d'onde sont couplés,

au moins un paramètre de couplage modifiant une intensité d'un couplage qui existe entre les modes propres individuels de deux au moins des guides d'onde (1, 2),

suivant lequel des valeurs respectives des paramètres individuels des guides d'onde (1, 2) et dudit au moins un paramètre de couplage sont sélectionnées de sorte que la relation d'accord de phase soit satisfaite pour au moins un ensemble de constantes de propagation respectives du signal de source, de chaque rayonnement de pompe et du signal utile, chacune relative à un mode propre collectif de l'ensemble des guides d'onde, effectif pour la propagation dudit signal de source, dudit au moins un rayonnement de pompe ou dudit signal utile, chaque mode propre collectif étant tel que le signal de source,

chaque rayonnement de pompe ou le signal utile qui se propage dans l'ensemble des guides d'onde selon ledit mode propre collectif possède une répartition d'intensité entre lesdits guides d'onde qui est constante au long des guides d'onde,

le procédé étant **caractérisé en ce que** le signal de source possède un spectre en forme de peigne à l'intérieur d'un intervalle spectral qui contient une partie au moins dudit signal de source.

2. Procédé selon la revendication 1, suivant lequel le signal optique utile est produit par un mélange à quatre ondes, comprenant de produire un photon du signal utile avec un photon supplémentaire du signal de source à partir de deux photons dudit au moins un rayonnement de pompe.

3. Procédé selon la revendication 1 ou 2, suivant lequel les guides d'onde (1, 2) sont formés dans un circuit optique intégré, et sont parallèles entre eux et disposés côte-à-côte dans au moins une partie dudit circuit optique intégré.

4. Procédé selon la revendication 3, suivant lequel au moins deux des guides d'onde (1, 2) sont courbes et parallèles dans un virage commun auxdits au moins deux guides d'onde, lesdits au moins deux guides d'onde ayant ainsi des courbures respectives différentes dans le virage, et certains au moins des paramètres individuels respectifs desdits au moins deux guides d'onde ayant des valeurs dans le virage, telles que deux parties d'au moins un même signal ou rayonnement parmi le signal utile, chaque rayonnement de pompe et le signal de source, qui se propagent l'une dans l'un quelconque desdits au moins deux guides d'onde et l'autre dans un autre desdits au moins deux guides d'onde, selon les modes propres individuels desdits guides d'onde, restent en phase selon des directions radiales perpendiculaires chacune auxdits au moins deux guides d'onde dans ledit virage.

5. Procédé selon la revendication 3 ou 4, dans lequel les guides d'onde (1, 2) ont des longueurs respectives qui sont comprises entre 1 mm et 100 mm, et deux quelconques des guides d'onde qui sont voisins ont une distance de séparation entre eux qui est comprise entre 0,125 $\mu$m et 3 $\mu$m, mesurée perpendiculairement auxdits deux guides d'onde voisins.

6. Procédé selon l'une quelconque des revendications précédentes, suivant lequel les valeurs des paramètres individuels des guides d'onde (1, 2) et dudit au moins un paramètre de couplage sont sélectionnées en outre de sorte que la relation d'accord de phase soit satisfaite à un ordre deux près par rapport à une longueur d'onde du signal de source, autour d'une valeur centrale de longueur d'onde dudit signal de source.

7. Procédé selon l'une quelconque des revendications précédentes, suivant lequel deux extrémités opposées d'un même des guides d'onde sont raccordées l'une à l'autre pour former une boucle de recirculation de signaux et rayonnements optiques.

8. Procédé selon l'une quelconque des revendications précédentes, suivant lequel le signal de source est constitué par au moins une composante spectrale qui possède une longueur d'onde comprise entre 1,3 $\mu$m et 1,8 $\mu$m, de préférence entre 1,5 $\mu$m et 1,6 $\mu$m, chaque rayonnement de pompe est un rayonnement laser de longueur d'onde comprise entre 1,2 $\mu$m et 2,6 $\mu$m, de préférence entre 1,7 $\mu$m et 2,1 $\mu$m, et le signal utile est constitué par au moins une autre composante spectrale qui possède une longueur d'onde comprise entre 2 $\mu$m et 6 $\mu$m, de préférence entre 2,2 $\mu$m et 4,5 $\mu$m.

9. Procédé selon l'une quelconque des revendications précédentes, suivant lequel le signal utile est utilisé pour une application spectroscopique, en particulier pour une application de spectroscopie moléculaire.

10. Dispositif optique, comprenant plusieurs guides d'onde (1, 2) ayant chacun un mode propre individuel qui est effectif pour des rayonnements optiques se propageant dans ledit guide d'onde isolément par rapport à chaque autre guide d'onde, chaque guide d'onde ayant au moins un paramètre individuel qui modifie une relation de dispersion effective pour chaque rayonnement qui se propage dans ledit guide d'onde selon le mode propre individuel dudit guide d'onde,

lesdits au moins deux guides d'onde (1, 2) étant agencés de sorte que le mode propre individuel de chacun des guides d'onde soit couplé avec un mode propre individuel d'au moins un autre des guides d'onde, chaque rayonnement qui se propage à un endroit des guides d'onde (1, 2) selon le mode propre individuel d'un desdits guides d'onde ayant une répartition d'intensité entre plusieurs des guides d'onde qui varie au long des guides d'onde, parce que certains au moins des modes propres individuels desdits guides d'onde sont couplés, le dispositif étant tel qu'au moins un paramètre de couplage modifie une intensité d'un couplage qui existe entre les modes propres individuels de deux au moins des guides d'onde (1, 2), le dispositif étant **caractérisé en ce que** des valeurs respectives des paramètres individuels des guides d'onde (1, 2) et dudit au moins un paramètre de couplage sont telles qu'un procédé conforme à l'une quelconque des revendications 1 à 9 puisse être mis en oeuvre en utilisant ledit dispositif.

## Patentansprüche

1. Verfahren zum Umsetzen der Frequenz eines optischen Quellsignals zum Erzeugen eines optischen Nutzsignals durch Mischen mehrerer Wellen, welches sich aus einer nicht-linearen Interaktion zwischen den Wellen ergibt, umfassend das Erzeugen im Inneren mindestens eines Wellenleiters (1, 2) mindestens eines Photons des Nutzsignals aus mindestens einem Photon mindestens einer optischen Pumpstrahlung gemäß einer Phasenanpassungsbeziehung, welche die jeweiligen Ausbreitungskonstanten des Quellsignals der mindestens einen Pumpstrahlung und des Nutzsignals, welche in dem mindestens einen Wellenleiter wirksam sind, verbindet,

wobei jeder Wellenleiter (1, 2) mindestens einen eigenen individuellen Modus aufweist, der für jedes von dem Quellsignal, von jeder Pumpstrahlung und dem Nutzsignal wirksam ist, die sich in dem Wellenleiter einzeln in Bezug auf jeden anderen Wellenleiter ausbreiten, wobei jeder Wellenleiter (1, 2) weiter mindestens einen individuellen Parameter aufweist, der eine wirksame Dispersionsrelation für das Quellsignal, jede Pumpstrahlung und das Nutzsignal, die sich in dem Wellenleiter entsprechend dem eigenen individuellen Modus ausbreiten, ändert, wobei der mindestens eine Wellenleiter mindestens zwei Wellenleiter (1, 2) umfasst, die angeordnet sind, sodass der eigene individuelle Modus eines jeden der Wellenleiter mit einem eigenen individuellen Modus mindestens eines anderen der Wellenleiter für jedes von dem Quellsignal, jeder Pumpstrahlung und dem Nutzsignal gekoppelt ist, wobei das Verfahren umfasst, das Quellsignal und jede Pumpstrahlung gleichzeitig in mindestens einen der Wellenleiter (1, 2) einzuspeisen, und das Nutzsignal aus mindestens einem der Wellenleiter zu extrahieren, wobei jedes von dem Quellsignal, jeder Pumpstrahlung und dem Nutzsignal, das sich an einer Stelle der Wellenleiter (1, 2) entsprechend einem eigenen individuellen Modus eines der Wellenleiter ausbreitet eine Intensitätsverteilung unter mehreren der Wellenleiter aufweist, die im Laufe der Wellenleiter variiert, da mindestens bestimmte der eigenen individuellen Modi der Wellenleiter gekoppelt sind, wobei mindestens ein Kopplungsparameter eine Intensität einer Kopplung ändert, die zwischen den eigenen individuellen Modi von mindestens zwei Wellenleitern (1, 2) besteht, wonach jeweilige Werte der individuellen Parameter der Wellenleiter (1, 2) und des mindestens einen Kopplungsparameters ausgewählt sind, sodass die Phasenanpassungsbeziehung für mindestens eine Einheit an jeweiligen Ausbreitungskonstanten des Quellsignals, einer jeden Pumpstrahlung und des Nutzsignals jeweils in Bezug auf einen eigenen kollektiven Modus der Einheit an Wellenleitern erfüllt ist, der für die Ausbreitung des Quellsignals, der mindestens einen Pumpstrahlung oder des Nutzsignals wirksam ist, wobei jeder eigene kollektive Modus dergestalt ist, dass das Quellsignal, jede Pumpstrahlung oder das Nutzsignal, das sich in der Einheit an Wellenleitern entsprechend dem eigenen kollektiven Modus ausbreitet, eine Intensitätsverteilung unter den Wellenleitern besitzt, die im Laufe der Wellenleiter konstant ist, wobei das Verfahren **dadurch gekennzeichnet ist, dass** das Quellsignal ein Spektrum in Form eines Kammes im Inneren eines Spektralintervalls besitzt, das mindestens einen Teil des Quellsignals enthält.

2. Verfahren nach Anspruch 1, wobei das optische Nutzsignal durch Mischen mit vier Wellen erzeugt wird, welches das Erzeugen eines Photons des Nutzsignals mit einem zusätzlichen Photon des Quellsignals aus zwei Photonen der mindestens einen Pumpstrahlung umfasst.

3. Verfahren nach Anspruch 1 oder 2, wobei die Wellenleiter (1, 2) in einer optischen integrierten Schaltung gebildet werden, und parallel zueinander sind, und Seite an Seite in mindestens einem Teil der optischen integrierten Schaltung angeordnet sind.

4. Verfahren nach Anspruch 3, wobei mindestens zwei der Wellenleiter (1, 2) gebogen und parallel in einem den mindestens zwei Wellenleitern gemeinsamen Wendepunkt sind, wobei die mindestens zwei Wellenleiter somit jeweilige unterschiedliche Biegungen in dem Wendepunkt aufweisen, und mindestens bestimmte der jeweiligen einzelnen Parameter der mindestens zwei Wellenleiter Werte in dem Wendepunkt aufweisen, sodass mindestens zwei Teile eines selben Signals oder eine Strahlung aus dem Nutzsignal, einer jeden Pumpstrahlung und dem Quellsignal, von denen sich eine in einem beliebigen der mindestens zwei Wellenleiter ausbreitet, und die andere in einem anderen der mindestens zwei Wellenleiter entsprechend den individuellen eigenen Modi der Wellenleiter ausbreitet, entlang radialer Richtungen, jeweils senkrecht zu den mindestens zwei Wellenleitern in dem Wendepunkt in Phase bleiben.

5. Verfahren nach Anspruch 3 oder 4, wobei die Wellenleiter (1, 2) jeweilige Längen aufweisen, die zwischen 1 mm und 100 mm liegen, und zwei beliebige der Wellenleiter, die benachbart sind, einen Trennungsabstand zwischen sich aufweisen, der, senkrecht zu den beiden benachbarten Wellenleitern gemessen, zwischen 0,125 $\mu$m und 3 $\mu$m liegt.

6. Verfahren nach einem der vorstehenden Ansprüche, wobei die Werte der individuellen Parameter der Wellenleiter (1, 2) und des mindestens einen Kopplungsparameters weiter ausgewählt werden, sodass die Phasenanpassungsbeziehung in der Größenordnung von zwei genau in Bezug auf eine Wellenlänge des Quellsignals, um einen zentralen Wert einer Wellenlänge des Quellsignals herum erfüllt ist.

7. Verfahren nach einem der vorstehenden Ansprüche, wobei zwei entgegengesetzte Enden eines selben der Wellenleiter aneinander angeschlossen sind, um eine Umlaufschleife für Signale und optische Strahlungen zu bilden.

8. Verfahren nach einem der vorstehenden Ansprüche, wobei das Quellsignal aus mindestens einer Spektralkomponente besteht, die eine Wellenlänge besitzt, die zwischen 1,3 $\mu$m und 1,8 $\mu$m, vorzugsweise zwischen 1,5 $\mu$m und 1,6 $\mu$m liegt, jede Pumpstrahlung eine Laserstrahlung mit einer Wellenlänge ist, die zwischen 1,2 $\mu$m und 2,6 $\mu$m, vorzugsweise zwischen 1,7 $\mu$m und 2,1 $\mu$m liegt, und das Nutzsignal aus mindestens einer weiteren Spektralkomponente besteht, die eine Wellenlänge besitzt, die zwischen 2 $\mu$m und 6 $\mu$m, vorzugsweise zwischen 2,2 $\mu$m und 4,5 $\mu$m liegt.

9. Verfahren nach einem der vorstehenden Ansprüche, wobei das Nutzsignal für eine Spektroskopie-Anwendung, insbesondere für eine Anwendung für Molekularspektroskopie verwendet wird.

10. Optische Vorrichtung, welche mehrere Wellenleiter (1, 2) umfasst, die jeweils einen eigenen individuellen Modus aufweisen, der für optische Strahlungen wirksam ist, die sich in dem Wellenleiter einzeln in Bezug auf jeden anderen Wellenleiter ausbreiten, wobei jeder Wellenleiter weiter mindestens einen individuellen Parameter aufweist, der eine wirksame Dispersionsrelation für jede Strahlung, die sich in dem Wellenleiter entsprechend dem eigenen individuellen Modus des Wellenleiters ausbreitet, ändert,

wobei die mindestens zwei Wellenleiter (1, 2) angeordnet sind, sodass der eigene individuelle Modus eines jeden der Wellenleiter mit einem eigenen individuellen Modus mindestens eines anderen der Wellenleiter gekoppelt ist,
jede Strahlung, die sich an einer Stelle der Wellenleiter (1, 2) entsprechend dem eigenen individuellen Modus eines der Wellenleiter ausbreitet, eine Intensitätsverteilung zwischen mehreren der Wellenleiter aufweist, die im Laufe der Wellenleiter variiert, da mindestens bestimmte der eigenen individuellen Modi der Wellenleiter gekoppelt sind,
wobei die Vorrichtung dergestalt ist, dass mindestens ein Kopplungsparameter eine Intensität einer Kopplung ändert, die zwischen den eigenen individuellen Modi von mindestens zwei der Wellenleiter (1, 2) besteht,
wobei die Vorrichtung **dadurch gekennzeichnet ist, dass** die jeweiligen Werte der individuellen Parameter der Wellenleiter (1, 2) und des mindestens einen Kopplungsparameters derart sind, dass ein Verfahren nach einem der Ansprüche 1 bis 9 durch Verwenden der Vorrichtung umgesetzt werden kann.

**Claims**

1.  A method for frequency-converting a source optical signal in order to produce a useful optical signal, by mixing a plurality of waves as a result of a non-linear interaction between said waves, comprising producing, within at least one waveguide (1, 2), at least one photon of the useful signal from at least one photon of at least one optical pumping radiation, in accordance with a phase-matching relationship which connects respective propagation constants of the source signal, of said at least one pumping radiation and of the useful signal that are effective in said at least one waveguide,

    each waveguide (1, 2) having at least one individual normal mode that is effective for each of the source signal, of each pumping radiation and of the useful signal propagating in said waveguide separately from each other waveguide,
    each waveguide (1, 2) also having at least one individual parameter that modifies a dispersion relationship which is effective for the source signal, each pumping radiation and
    the useful signal that propagate in said waveguide according to the individual normal mode of said waveguide, said at least one waveguide comprising at least two waveguides (1, 2), which are arranged so that the individual normal mode of each of the waveguides is coupled with an individual normal mode of at least one another of the waveguides, for each of the source signal, of each pumping radiation and of the useful signal,
    the method comprising simultaneously injecting the source signal and each pumping radiation into at least one of the waveguides (1, 2), and extracting the useful signal from at least one of the waveguides,
    each of the source signal, of each pumping radiation and of the useful signal that propagates at a location in the waveguides (1, 2) according to the individual normal mode of one of said waveguides having an intensity distribution between several of the waveguides that varies along the waveguides, since at least some of the individual normal modes of said waveguides are coupled,
    at least one coupling parameter changing an intensity of a coupling that exists between the individual normal modes of at least two of the waveguides (1, 2),
    wherein respective values of the individual parameters of the waveguides (1, 2) and of said at least one coupling parameter are selected so that the phase-matching relationship is met for at least one set of respective propagation constants of the source signal, of each pumping radiation and of the useful signal, each relating to a collective normal mode of all of the waveguides, that is effective for the propagation of said source signal, of said at least one pumping radiation or of said useful signal, each collective normal mode being such that the source signal, each pumping radiation or the useful signal that propagates in all of the waveguides according to said collective normal mode has an intensity distribution between said waveguides that is constant along the waveguides,
    the method being **characterized in that** the source signal has a comb-shaped spectrum within a spectral range that contains at least one portion of said source signal.

2.  The method as claimed in claim 1, wherein the useful optical signal is produced by a four-wave mixing, comprising producing a photon of the useful signal with an additional photon of the source signal from two photons of said at least one pumping radiation.

3.  The method as claimed in claim 1 or 2, wherein the waveguides (1, 2) are formed in an integrated optical circuit, and are parallel to each other and arranged side-by-side in at least one portion of said integrated optical circuit.

4.  The method as claimed in claim 3, wherein at least two of the waveguides (1, 2) are curved and parallel in a bend shared by said at least two waveguides, said at least two waveguides thus having different respective curvatures in the bend, and at least some of the respective individual parameters of said at least two waveguides having values in the bend, such that two portions of at least one and same signal or radiation from among the useful signal, each pumping radiation and the source signal, one of which propagates in any of said at least two waveguides and the other one which propagates in another one of said at least two waveguides, according to the individual normal modes of said waveguides, remain in-phase along radial directions each perpendicular to said at least two waveguides in said bend.

5.  The method as claimed in claim 3 or 4, wherein the waveguides (1, 2) have respective lengths that range between 1 mm and 100 mm, and any two of the waveguides that are neighboring have a separation distance between them that ranges between 0.125 $\mu$m and 3 $\mu$m, measured perpendicular to said two neighboring waveguides.

6.  The method according to any one of the preceding claims, wherein the values of the individual parameters of the waveguides (1, 2) and of said at least one coupling parameter are also selected so that the phase-matching relationship is met to nearest second-order in relation to a wavelength of the source signal, around a central wavelength value of said source signal.

7. The method as claimed in any one of the preceding claims, wherein two opposite ends of a same one of the waveguides are connected to each other in order to form a loop for recirculating optical signals and radiations.

8. The method as claimed in any one of the preceding claims, wherein the source signal is made up of at least one spectral component that has a wavelength ranging between 1.3 μm and 1.8 μm, preferably between 1.5 μm and 1.6 μm, each pumping radiation is a laser radiation with a wavelength ranging between 1.2 μm and 2.6 μm, preferably between 1.7 μm and 2.1 μm, and the useful signal is made up of at least one other spectral component, which has a wavelength ranging between 2 μm and 6 μm, preferably between 2.2 μm and 4.5 μm.

9. The method as claimed in any one of the preceding claims, wherein the useful signal is used for a spectroscopic application, in particular for a molecular spectroscopy application.

10. An optical device, comprising a plurality of waveguides (1, 2) each having an individual normal mode that is effective for optical radiations propagating in said waveguide separately from each other waveguide, each waveguide having at least one individual parameter that modifies a dispersion relationship effective for each radiation that propagates in said waveguide according to the individual normal mode of said waveguide,

said at least two waveguides (1 , 2) being arranged so that the individual normal mode of each of the waveguides is coupled with an individual normal mode of at least one another of the waveguides,
each radiation that propagates at a location in the waveguides (1, 2) according to the individual normal mode of one of said waveguides having an intensity distribution between several of waveguides that varies along the waveguides, since at least some of the individual normal modes of said waveguides are coupled,
the device being such that at least one coupling parameter modifies an intensity of a coupling that exists between the individual normal modes of at least two of the waveguides (1, 2), the device being **characterized in that** respective values of the individual parameters of the waveguides (1, 2) and of said at least one coupling parameter are such that a method as claimed in any one of claims 1 to 9 can be implemented using said device.

FIG. 1a

FIG. 1b

FIG. 2

FIG. 3

$I_{utile}$

0

0

x

FIG. 4

2

1

W

$L_2$

$L_1$

$R_2$

R

$R_1$

FIG. 5

1

2

1b

signal utile

W

1a

2b

2a

C

signal de source
rayonnement de pompe

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **IVAN BIAGGIO ; VIRGINIE CODA ; GERMANO MONTEMEZZANI.** Coupling-length phase matching for nonlinear optical frequency conversion in parallel waveguides. *Physical Review A,* 2014, vol. 90, 043816